# EUROPÄISCHE PATENTANMELDUNG

(11) **EP 3 297 129 A1**
(43) Veröffentlichungstag der Anmeldung: **21.03.2018**
(21) Anmeldenummer: 16188758.3
(22) Anmeldetag: 14.09.2016
(51) Int. Cl.: H02K 1/27, H02K 1/28, H02K 1/30

(54) **ROTOR FÜR EINE ELEKTRISCHE ROTIERENDE MASCHINE**

(71) Anmelder: Siemens Aktiengesellschaft, 80333 München (DE)
(72) Erfinder: Schulz, Sabrina, 13125 Berlin (DE); Balzer, Christoph, 12163 Berlin (DE)

(57) **Zusammenfassung**

Die Erfindung betrifft einen Rotor (2) für eine elektrische rotierende Maschine (3), insbesondere eine Synchronmaschine (44), welcher eine Welle (4) und zumindest ein Blechpaket (8) aufweist, wobei zwischen der Welle (4) und dem zumindest einen Blechpaket (8) eine in Radialrichtung (R) wirkende formschlüssige Verbindung ausgebildet ist, wobei das zumindest eine Blechpaket (8) Teilblechpakte (10) umfasst, welche sich in Axialrichtung (A) hintereinander erstrecken. Um eine hohe Laufruhe zu erreichen, wird vorgeschlagen, dass zumindest zwischen zwei benachbarten Teilblechpaketen (10) ein Klemmelement (18) angeordnet ist, wobei zwischen dem Klemmelement (18) und zumindest einem der benachbarten Teilblechpakete (10) eine kraftschlüssige Verbindung ausgebildet ist.

## Beschreibung

Die Erfindung betrifft einen Rotor für eine elektrische rotierende Maschine, insbesondere eine Synchronmaschine, welcher eine Welle und zumindest ein Blechpaket aufweist, wobei zwischen der Welle und dem zumindest einen Blechpaket eine in Radialrichtung wirkende formschlüssige Verbindung ausgebildet ist, wobei das zumindest eine Blechpaket Teilblechpakte umfasst, welche sich in Axialrichtung hintereinander erstrecken.

Weiterhin betrifft die Erfindung eine elektrische rotierende Maschine, insbesondere eine Synchronmaschine, die zumindest einen derartigen Rotor aufweist.

Ferner betrifft die Erfindung einen Gondelantrieb mit zumindest einer derartigen elektrischen rotierenden Maschine.

Darüber hinaus betrifft die Erfindung ein Schiff mit zumindest einem derartigen Gondelantrieb.

Eine derartige elektrische rotierende Maschine, beispielsweise ein Motor oder ein Generator, kommt insbesondere im Schiffsbau vor und weist bevorzugt eine Leistung von zumindest einem Megawatt auf. Die elektrische rotierende Maschine ist insbesondere als Synchronmaschine ausgeführt und weist einen Stator und einen um eine Rotationsachse drehbaren Rotor mit einer Welle und zumindest einem Blechpaket auf. Das zumindest eine Blechpaket weist mehrere Pole auf, welche beispielsweise als Elektromagnete, insbesondere mit Spulen, oder als Permanentmagnete ausgeführt. Je nach Ausführungen der Welle gibt es unterschiedliche Möglichkeiten wie das Blechpaket des Rotors an der Welle befestigt wird ohne dass es, selbst in einem Kurzschlussfall, zu einer Berührung zwischen dem Rotor und dem Stator kommt. Zudem gibt es oftmals Anforderungen zur Geräuschintensität, was ruhigen Lauf voraussetzt.

Um die Leistung und Größe der elektrischen rotierenden Maschine kostengünstig und einfach an die Anforderungen des Kunden anpassen zu können, wird die Maschine modular aufgebaut und kann so durch hinzufügen oder Entfernen von, beispielsweise identischen, Aktivteilen modular in der Größe und Leistung skaliert werden.

Die Patentschrift DE 657 790 C offenbart eine Befestigung eines Blechpakets im Gehäuse einer großen elektrischen rotierenden Maschine, die insbesondere in einem Betonfundament befestigt ist. Die elektrische rotierende Maschine weist Tragprismen für das Blechpaket auf, die an Gehäusewangen befestigt sind. Die die Prismen tragenden Gehäusewangen sind nachgiebig ausgeführt.

Die Patentschrift EP 1 756 928 B1 offenbart einen Synchronmotor mit einem Rotor, auf dem Magnete durch Klemmelemente befestigt sind, wobei die Klemmelemente aus am Rotor und zwischen den Magneten angeordneten Stegen bestehen. Nuten sind so in die Stege eingebracht, dass sie ein zumindest abschnittsweises Aufweiten der Stege auf der dem Rotor abgewandten Seite ermöglichen.

Die Offenlegungsschrift DE 10 329 651 A1 offenbart einen Linearmotor mit polygonförmigem Querschnitt, der einen Primärteil mit mehreren polygonartig angeordneten Blechpaketen und umlaufenden Wicklungsspulen umfasst. Die Blechpakete werden modulartig zu Primärteilen aus unterschiedlich vielen Blechpaketen zusammengefügt, um auf einfache Weise verschiedene Motoren unterschiedlicher Leistungen herzustellen. Diese Linearmotoren zeichnen sich durch hohe Schubkraft bei kurzer Bauform aus.

Der Erfindung liegt die Aufgabe zugrunde, einen Rotor, insbesondere für eine Synchronmaschine, bereitzustellen, der eine hohe Laufruhe aufweist.

Die Aufgabe wird erfindungsgemäß durch einen Rotor der eingangs genannten Art gelöst, wobei zumindest zwischen zwei benachbarten Teilblechpakten ein Klemmelement angeordnet ist, wobei zwischen dem Klemmelement und zumindest einem der benachbarten Teilblechpakte eine kraftschlüssige Verbindung ausgebildet ist.

Weiterhin wird die Aufgabe erfindungsgemäß durch eine elektrische rotierende Maschine, insbesondere eine Synchronmaschine, gelöst, welche zumindest einen derartigen Rotor aufweist.

Ferner wird die Aufgabe erfindungsgemäß durch einen Gondelantrieb mit zumindest einer derartigen elektrischen rotierenden Maschine gelöst.

Darüber hinaus wird die Aufgabe erfindungsgemäß durch ein Schiff mit zumindest einem derartigen Gondelantrieb gelöst.

Die in Bezug auf den Rotor nachstehend angeführten Vorteile und bevorzugten Ausgestaltungen lassen sich sinngemäß auf die elektrische rotierende Maschine, den Gondelantrieb und das Schiff übertragen.

Die Erfindung basiert auf der Idee, einen in Leistung und Größe skalierbaren Rotor, insbesondere für eine Synchronmaschine, anzugeben, der eine hohe Laufruhe aufweist. Auf dem Rotor sind insbesondere mehrere Blechpakete in Umfangsrichtung um die Welle herum angeordnet, wobei ein Blechpaket mehrere Teilblechpakete umfasst, die in Axialrichtung hintereinander an der Welle angeordnet sind. Die Teilblechpakete weisen beispielsweise Permanentmagnete auf oder sind dafür geeignet, mit einer Spule umwickelt zu werden. Die Teilblechpakete werden zumindest in Radialrichtung formschlüssig mit der Welle verbunden. Eine derartige in Radialrichtung wirksame formschlüssige Verbindung wird beispielsweise realisiert, indem die Teilblechpakete in Axialrichtung auf die Welle geschoben werden. Mit Hilfe der einzelnen an der Welle fixierten Teilblechpakete lassen sich verschiedene Längen des Rotors implementieren, die für elektrische Maschinen mit unterschiedlicher Leistung geeignet sind. Durch die Verwendung von Standardkomponenten als Teilblechpakete, die nahezu beliebig kombinierbar sind, ist der Rotor einfach und kostengünstig skalierbar. Damit sich die Teilblechpakete nicht in der Führungsnut bewegen und dadurch klappern, ist zumindest zwischen zwei benachbarten Teilblechpakten ein Klemmelement angeordnet. Das Klemmelement bildet eine zusätzliche kraftschlüssige Verbindung mit zumindest einem ihm benachbarten Teilblechpakt aus. Die kraftschlüssige Verbindung führt zu einer Fixierung des Blechpakets auf der Welle und verhindert, insbesondere bei im Betrieb auftretenden Fliehkräften, ein Klappern der Teilblechpakete in der Nut, was sich positiv auf die Laufruhe des Rotors auswirkt.

In einer bevorzugten Ausführungsform ist das Klemmelement als ein von der Welle getrenntes Element ausgeführt. Durch Verwendung eines separaten Bauteils kann auch die Welle einfach und kostengünstig skaliert werden. Ferner ergeben sich durch die Verwendung eines separaten Bauteils mehr Freiheiten bei der Ausgestaltung des Klemmelements. Es kann beispielsweise ein anderes Material für das Klemmelement als für die Welle verwendet werden, um die elektrischen oder mechanischen Eigenschaften des Rotors zu optimieren.

Bei einer weiteren vorteilhaften Ausgestaltung weist zumindest ein Teil des Klemmelements eine variable Dicke auf. Insbesondere vergrößert sich die Dicke des Klemmelements in Radialrichtung zur Welle hin. Durch die variable Dicke kann das Teilblechpaket leicht verklemmt und damit fixiert werden.

Bevorzugt ist das Klemmelement als Keilblech ausgeführt. Ein Keilblech ist ein längsprofiliertes Blech, dessen Dicke sich, zumindest teilweise, verändert. Eine derartige Dickenveränderung bei der Herstellung des Keilblechs wird beispielsweise durch eine kontinuierliche Einstellung der Walzspalte während eines Materialdurchgangs durch ein Walzgerüst erreicht. Insbesondere nimmt die Dicke des Keilblechs zur Welle hin zu, wodurch die Teilblechpakete durch einen Druck schräg zur Rotationsachse verklemmt werden. Derartige Keilbleche sind robust und leicht zu fertigen.

Vorteilhaft ist das Klemmelement als Federblech ausgeführt. Die Teilblechpakete erwärmen sich während des Betriebes und dehnen sich dadurch aus. Das als Federblech ausgeführte Klemmelement kompensiert die thermische Ausdehnung durch Veränderung der Vorspannung.

In besonders vorteilhafter Weise ist das Federblech im Wesentlichen Y-förmig ausgebildet. Durch die Y-Form lässt sich eine Federwirkung zur Kompensierung einer thermischen Ausdehnung einfach und zuverlässig implementieren.

In einer bevorzugten Ausführungsform ist das Klemmelement aus einem amagnetischen Material ausgebildet. Insbesondere besteht das Klemmelement aus einem Federstahl, der im Vergleich zu anderen Stählen eine höhere Festigkeit und eine höhere Elastizitätsgrenze. Insbesondere weist der Federstahl eine Elastizitätsgrenze von zumindest 1000 N/mm² auf. Da der Abstand zwischen den Teilblechpaketen insbesondere im Millimeterbereich liegt, beeinflusst das amagnetische Material des Klemmelements die elektromagnetischen Eigenschaften des Blechpakets, wenn überhaupt, vernachlässigbar.

Zweckdienlicherweise ist die Welle aus einem weichmagnetischen Material ausgebildet. Erfahrungsgemäß hat sich ein derartiges Material, im Hinblick auf die elektromagnetischen Eigenschaften des Rotors, als besonders vorteilhaft erwiesen.

Bei einer weiteren vorteilhaften Ausgestaltung ist eine in Axialrichtung verlaufende Führungsnut oder Führungsschiene zur radialen Fixierung der Teilblechpakete des zumindest einen Blechpakets vorgesehen. Eine derartige Führungsnut oder Führungsschiene wird beispielswiese in die Welle gefräst. Da keine zusätzlichen Verbindungselemente, wie beispielsweise Schrauben oder Bolzen, die sich unter Umständen lösen können, zur Ausbildung der formschlüssigen Verbindung zwischen der Welle und den Teilblechpaketen erforderlich sind, ist eine derartige formschlüssige Verbindung zuverlässig und einfach zu fertigen.

In besonders vorteilhafter Weise ist die Führungsnut als eine Hammerkopfnut oder Schwalbenschwanznut ausgebildet. Eine Hammerkopfnut oder Schwalbenschwanznut ist eine Nut mit einer bewährten und zuverlässigen Profilierung zur Ausbildung einer formschlüssigen Verbindung.

In einer bevorzugten Ausgestaltung weist zumindest eines der zwei benachbarten Teilblechpakete eine Aussparung zur Aufnahme von zumindest einem Teil des Klemmelements auf. Die Aussparung ist insbesondere korrespondierend zur Form des Klemmelements ausgeführt. Durch eine derartige Aussparung ist die Kontaktfläche zwischen dem Teilblechpaket und der Welle größer, wodurch die kraftschlüssige Verbindung stärker und zuverlässiger ist.

Bevorzugt weisen die Teilblechpakete Permanentmagnete auf. Durch eine derartige Rotorarchitektur können die Permanentmagnete, gemäß mechanischer und elektrischer Anforderungen, mit geringem Aufwand auf dem Rotor angeordnet werden. Insbesondere eine Skalierung des Rotors hinsichtlich der Polpaarzahl ist einfach und kostengünstig realisierbar.

Bei einer weiteren vorteilhaften Ausführungsform verlaufen durch die Teilblechpakete Kühlkanäle für ein Kühlmittel, wobei das Klemmelement für einen ungehinderten Durchfluss des Kühlmittels zwischen den benachbarten Teilblechpaketen dimensioniert ist. Durch derartige Kühlkanäle werden insbesondere die Permanentmagnete effizient gekühlt. Das Vorhandensein des Klemmelements beeinflusst die Kühlleistung, wenn überhaupt, vernachlässigbar.

In besonders vorteilhafter Weise sind an zumindest einem axialen Ende des zumindest einen Blechpakets ein Abschlusselement zur Begrenzung des zumindest einen Blechpakets angeordnet. Durch ein derartiges Abschlusselement werden die Teilblechpakete in Axialrichtung, insbesondere federnd, fixiert. Insbesondere durch ein lösbares Abschlusselement können die Teilblechpakete einfach und schnell gewartet und ausgetauscht werden.

Vorteilhaft ist zwischen dem zumindest einen Blechpaket und dem Abschlusselement eine formschlüssige Verbindung ausgebildet. Eine formschlüssige Verbindung ist vorteilhaft, da die Verbindung zuverlässig und zerstörungsfrei lösbar ist.

Bevorzugt ist das Abschlusselement lösbar mit der Welle verbunden. Durch eine lösbare Verbindung ist das Abschlusselement leicht und ohne Beschädigung der Welle austauschbar.

In besonders vorteilhafter Weise ist das Abschlusselement als ein Blech oder als ein Bolzen ausgeführt. Insbesondere wird das Blech mit der Welle verschraubt. Ein Blech oder ein Bolzen sind zuverlässige und einfache Verbindungselemente die eine hohe Wartungsfreundlichkeit des Blechpakets gewährleisten.

Im Folgenden wird die Erfindung anhand der in den Figuren dargestellten Ausführungsbeispiele näher beschrieben und erläutert.

Es zeigen:
- FIG 1: eine dreidimensionale Schnittdarstellung einer ersten Ausführungsform eines Rotors,
- FIG 2: einen Längsschnitt der ersten Ausführungsform eines Rotors,
- FIG 3: einen vergrößerten Längsschnitt der ersten Ausführungsform eines Rotors nach FIG 1 im Bereich zweier benachbarter Teilblechpakete,
- FIG 4: einen Längsschnitt einer zweiten Ausführungsform eines Rotors,
- FIG 5: eine dreidimensionale Darstellung eines Klemmelements,
- FIG 6: einen dreidimensionalen Ausschnitt der zweiten Ausführungsform eines Rotors im Bereich eines Blechpakets,
- FIG 7: einen vergrößerten Querschnitt einer dritten Ausführungsform eines Rotors im Bereich eines Blechpakets,
- FIG 8: eine elektrische rotierende Maschine und
- FIG 9: ein Schiff mit einem Gondelantrieb.

Gleiche Bezugszeichen haben in den verschiedenen Figuren die gleiche Bedeutung.

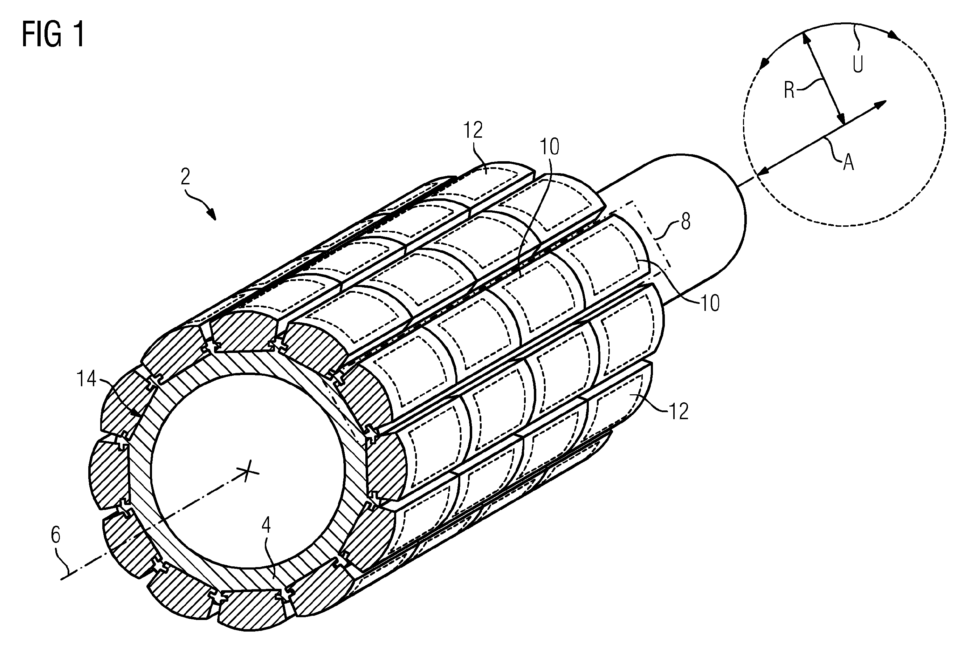

FIG 1 zeigt eine dreidimensionale Schnittdarstellung einer ersten Ausführungsform eines Rotors 2. Der Rotor 2, welcher für eine elektrische rotierende Maschine mit einer maximalen Leistung von zumindest einem Megawatt geeignet ist und einen Durchmesser von zumindest 1 Meter hat, weist eine Welle 4 auf, die als Hohlwelle ausgeführt und um eine Rotationsachse 6 rotierbar ist. Die Rotationsachse definiert eine Axialrichtung A, eine Radialrichtung R und eine Umfangsrichtung U. Um die Welle 4 herum sind Blechpakete 8 mit einer axialen Länge von zumindest 2 Meter, insbesondere rotationssymmetrisch, verteilt, die mehrere Teilblechpakete 10 umfassen. Die Teilblechpakete 10 sind hintereinander in Axialrichtung A auf der Welle 4 angeordnet. Die Teilblechpakete 10 umfassen jeweils zumindest einen Permanentmagneten 12, können aber auch beispielswiese dafür geeignet sein von einer Spule umwickelt zu sein. Die Teilblechpakete 10 werden nacheinander über radial am Umfang verteilte Führungsnuten 14 auf die Welle 4 geschoben wodurch zwischen den Teilblechpaketen 10 des jeweiligen Blechpakets 8 und der korrespondierenden Führungsnut 14 eine in Radialrichtung R wirkende formschlüssigen Verbindung ausgebildet wird.

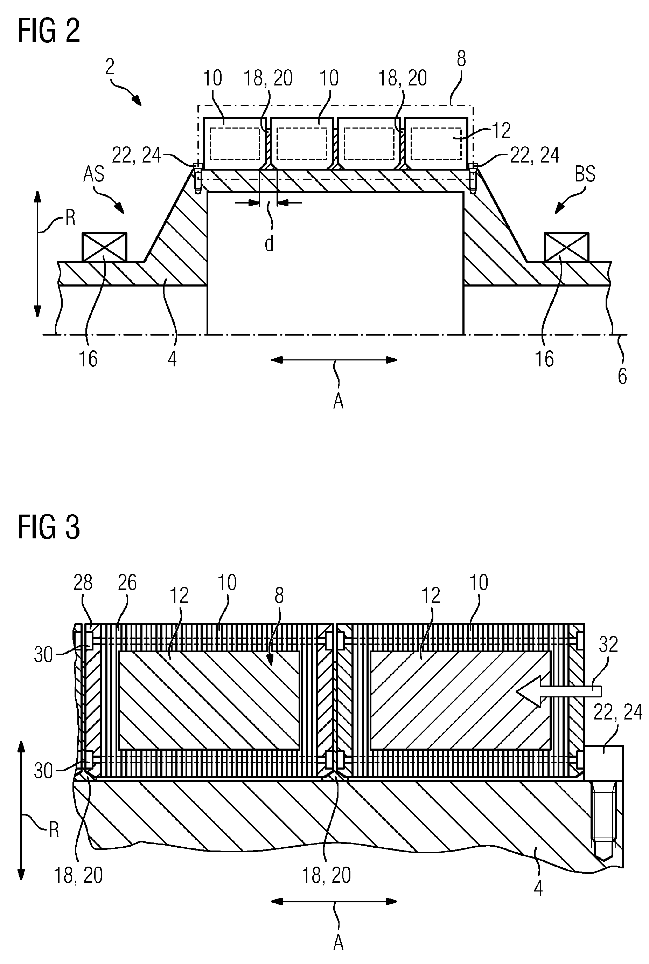

FIG 2 zeigt einen Längsschnitt der ersten Ausführungsform eines Rotors 2. Die Welle 4 weist an einer Antriebsseite AS und an einer Nicht-Antriebsseite BS jeweils ein Lager 16 auf. Das Blechpaket 8 umfasst exemplarisch vier Teilblechpakete 10. Zwischen jeweils zwei benachbarten Teilblechpaketen 10 ist je ein Klemmelement 18 angeordnet, das als Keilblech 20 ausgeführt ist und beispielsweise aus einem weichmagentischen Metall, insbesondere Stahl, besteht. Die Keilbleche 20 können aber auch aus einem amagnetischen Material bestehen. Die Dicke d eines Teils der Keilbleche 20 vergrößert sich im Bereich der Welle 4 linear. Die Teilblechpakete 10 weisen zur Form der Keilbleche 20 korrespondierende Aussparungen (21) auf. Andere Ausführungsformen des Keilblechs 20 mit nichtlinearer Vergrößerung der Dicke d und/oder Vergrößerung der Dicke d über die gesamte radiale Länge und/oder einseitiger Vergrößerung der Dicke d des Keilblechs 20 sind möglich und Gegenstand der Erfindung. Durch die variable Dicke des Keilblechs 20 ist zwischen dem Keilblech 20 und den benachbarten Teilblechpaketen 10 eine kraftschlüssige Verbindung ausgebildet. An den axialen Enden des Blechpakets 8 ist jeweils ein Abschlusselement 22 zur Begrenzung des Blechpakets 8 angeordnet, wobei die Abschlusselemente 22 als Bolzen 24 ausgeführt sind und mit der Welle 4 verschraubt sind. Durch die Abschlusselemente 22 werden die Teilblechpakete 10 des Blechpakets 8 formschlüssig in Axialrichtung fixiert. Die weitere Ausführung des Rotors 2 entspricht der in FIG 1.

FIG 3 zeigt einen vergrößerten Längsschnitt der ersten Ausführungsform eines Rotors 2 im Bereich zweier benachbarter Teilblechpakete 10. Die Teilblechpakete 10 umfassen Permanentmagnete 12 und einen Stapel Elektrobleche 26, die von beidseitig angeordneten Druckplatten 28 und durch das Teilblechpaket 10 verlaufenden Spannbolzen 30 zusammengehalten werden. Wie in FIG 2 gezeigt befinden sich zwischen den benachbarten Teilblechpaketen 10 Klemmelemente 18 die als Keilbleche 20 ausgeführt sind. Durch axialen Druck 32 und mit Hilfe der Keilbleche 20 werden die Teilblechpakete 10 innerhalb der Führungsnut 14 verklemmt. Die weitere Ausführung des Rotors 2 entspricht der in FIG 2.

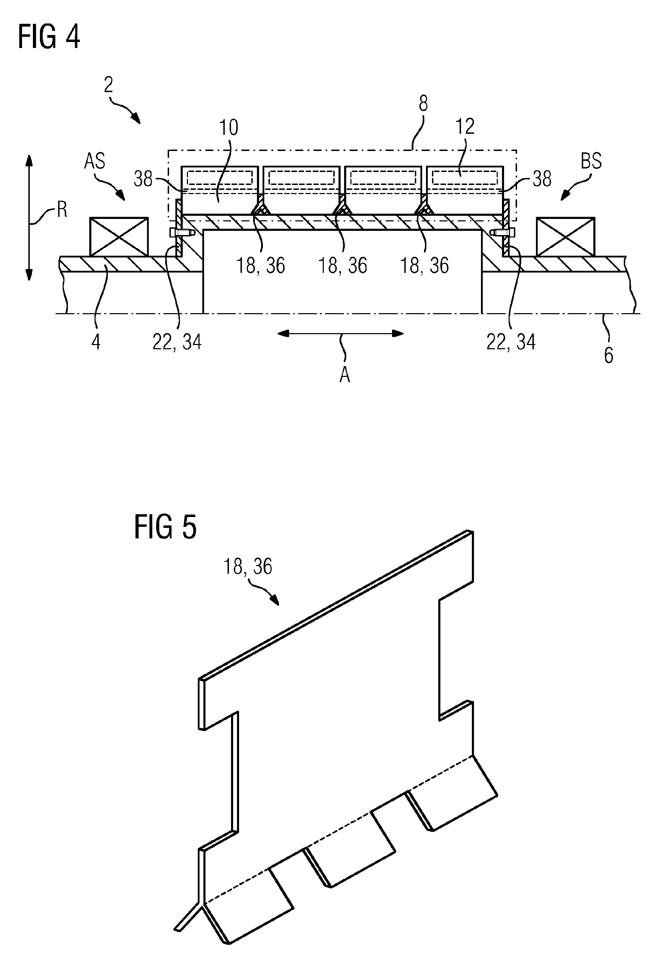

FIG 4 zeigt einen Längsschnitt einer zweiten Ausführungsform eines Rotors 2. Die Abschlusselemente 22 an den axialen Enden des Blechpakets 8 sind als Bleche 34 ausgeführt und mit der Welle 4 verschraubt. Zwischen jeweils zwei benachbarten Teilblechpaketen 10 ist je ein Klemmelement 18 angeordnet, das als Federblech 36 ausgeführt ist. Das Federblech 36 ist im Wesentlichen Y-förmig ausgebildet und sorgt dafür, dass die Teilblechpakete 10 des jeweiligen Blechpakets 8 federnd gesichert sind, wobei beispielsweise bei einer thermischen Ausdehnung die Vorspannung durch die Federbleche 36 reguliert wird. Das als Federblech 36 ausgeführte Klemmelement 18 besteht aus einem amagnetischen Material, insbesondere Federstahl. Da die Blechdicke des Federblechs 36 im Millimeterbereich liegt, beeinflusst das amagnetische Material des Klemmelements 18 die elektromagnetischen Eigenschaften des Blechpakets 8 nicht merklich.

Durch die Teilblechpakete 10 verlaufen Kühlkanäle 38 für ein Kühlmittel, wobei das als Federblech 36 ausgeführte Klemmelement 18 für einen ungehinderten Durchfluss des Kühlmittels zwischen den benachbarten Teilblechpaketen 10 dimensioniert ist. Die Kühlkanäle 38 verlaufen oberhalb des Federblechs 36 und/oder das Federblech 36 weist Aussparungen auf, die einen ungehinderten Kühlmittelfluss ermöglichen. Die weitere Ausführung des Rotors 2 entspricht der in FIG 2.

FIG 5 zeigt eine dreidimensionale Darstellung eines Klemmelements 18, das als Federblech 36 ausgestaltet ist. Durch die im Wesentlichen Y-förmige Ausgestaltung wird eine elastische Verklemmung der Teilblechpakete 10 in der Führungsnut 14 ermöglicht, wodurch beispielsweise eine thermische Ausdehnung durch eine Änderung der Vorspannung der Federbleche 36 kompensiert wird.

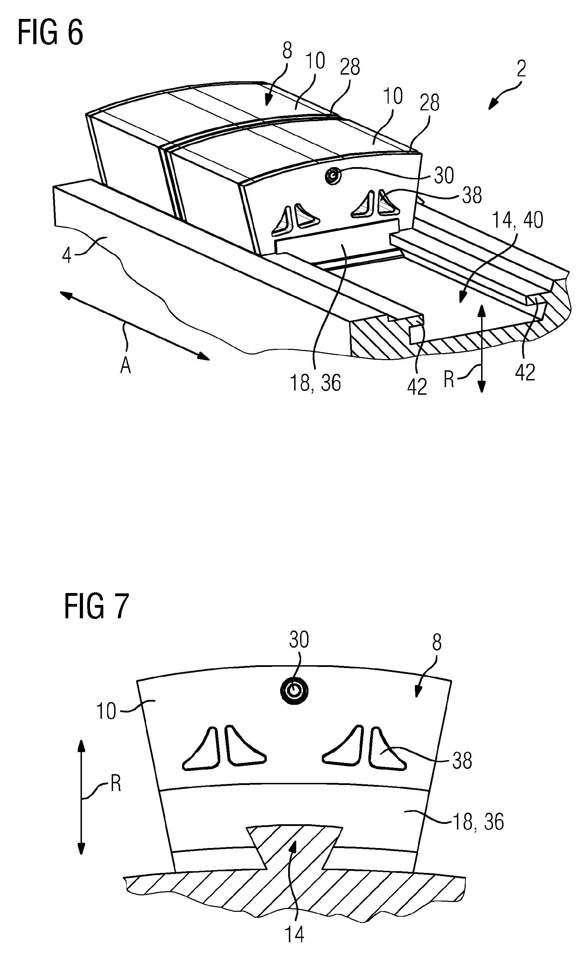

FIG 6 zeigt einen dreidimensionalen Ausschnitt der zweiten Ausführungsform eines Rotors 2 im Bereich eines Blechpakets 8. Aus Gründen der Übersichtlichkeit sind nur zwei Teilblechpakete 10 des Blechpakets 8 in der Führungsnut 14 dargestellt. Die Führungsnut 14 ist als Hammerkopfnut 40 ausgebildet, die durch eine beidseitig angeordnete Profilierung 42 mit den Teilblechpaketen 10 eine in Radialrichtung R wirkende formschlüssige Verbindung ausbildet. Die Führungsnut 14 kann beispielsweise auch als Schwalbenschwanznut ausgebildet sein. Kühlkanäle 38 verlaufen durch die Teilblechpakete 10 oberhalb des Federblechs. Die weitere Ausführung des Rotors 2 entspricht der in FIG 4.

FIG 7 zeigt einen vergrößerten Querschnitt einer dritten Ausführungsform eines Rotors 2 im Bereich eines Blechpakets 8. Über eine Führungsschiene 43 ist eine in Radialrichtung R wirkende formschlüssige Verbindung zwischen der Welle 4 und dem Blechpaket 8 ausgebildet, wobei die Führungsschiene 43 exemplarisch schwalbenschwanzförmig ausgebildet ist. Die Führungsschiene 43 kann zur Ausbildung einer formschlüssigen Verbindung zwischen der Welle 4 und dem Blechpaket 8 auch andersartig, beispielsweise hammerkopfförmig, ausgeführt sein. Die weitere Ausführung des Rotors 2 entspricht der in FIG 6.

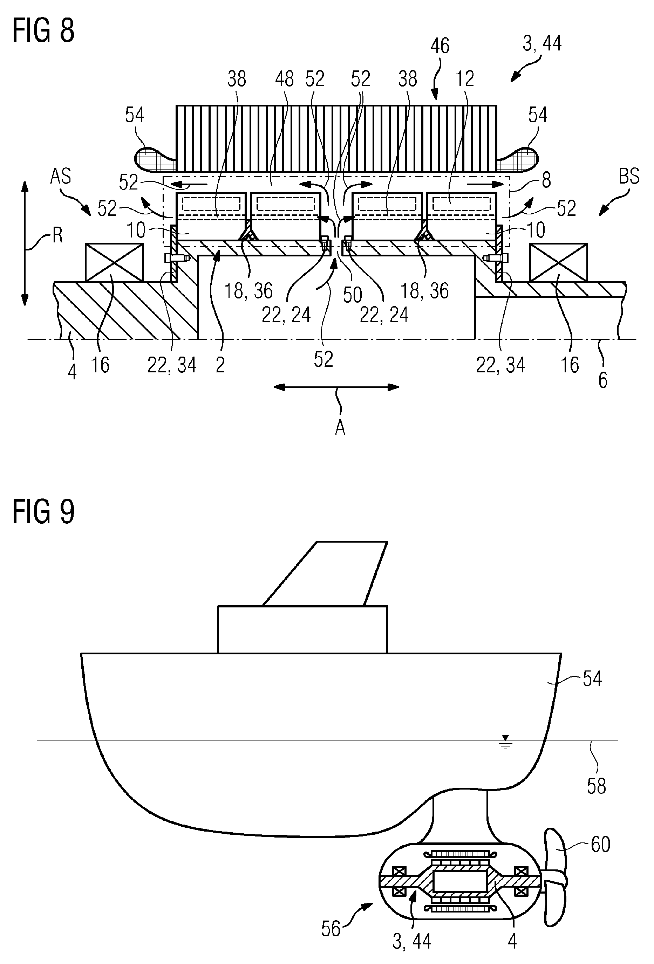

FIG 8 zeigt eine elektrische rotierende Maschine 3, die als Synchronmaschine 44 ausgeführt ist, mit einem Rotor 2 und einem den Rotor 2 umgebenden Stator 46. Zwischen dem Rotor 2 und dem Stator 46 befindet sich ein Spalt 48, insbesondere ein Luftspalt. Der Rotor 2 der elektrischen rotierenden Maschine 3 weist Blechpakete 8 mit Permanentmagneten 12 auf, wobei die Blechpakete 8 direkt an den Spalt 48 angrenzen. Exemplarisch in der Mitte der Blechpakete 8 befindet sich zumindest eine Kühlmittelöffnung 50 in der Welle 4, durch die ein Kühlmittel geleitet wird. Die Kühlmittelströmung 52 verläuft von der Kühlmittelöffnung 50 durch Kühlkanäle 38 in den Teilblechpaketen 10 und durch den Spalt 48 zu den Wickelköpfen 54 des Stators 46. Die weitere Ausführung des Rotors 2 entspricht der in FIG 4.

FIG 9 zeigt ein Schiff 54 mit einem Gondelantrieb 56. Der Gondelantrieb 56 befindet sich unter einer Wasseroberfläche 58 und weist eine elektrische rotierende Maschine 3 und einen Propeller 60 auf, wobei der Propeller 60 über eine Welle 4 mit der elektrischen rotierenden Maschine 3 verbunden ist.

## Patentansprüche

1. Rotor (2) für eine elektrische rotierende Maschine (3), insbesondere eine Synchronmaschine (44),
welcher eine Welle (4) und zumindest ein Blechpaket (8) aufweist,
wobei zwischen der Welle (4) und dem zumindest einen Blechpaket (8) eine in Radialrichtung (R) wirkende formschlüssige Verbindung ausgebildet ist,
wobei das zumindest eine Blechpaket (8) Teilblechpakte (10) umfasst,
welche sich in Axialrichtung (A) hintereinander erstrecken,
**dadurch gekennzeichnet, dass**
zumindest zwischen zwei benachbarten Teilblechpaketen (10) ein Klemmelement (18) angeordnet ist,
wobei zwischen dem Klemmelement (18) und zumindest einem der benachbarten Teilblechpakete (10) eine kraftschlüssige Verbindung ausgebildet ist.

2. Rotor (2) nach Anspruch 1,
wobei das Klemmelement (18) als ein von der Welle (4) getrenntes Element ausgeführt ist.

3. Rotor (2) nach einem der Ansprüche 1 oder 2,
wobei zumindest ein Teil des Klemmelements (18) eine variable Dicke (d) aufweist.

4. Rotor (2) nach einem der vorherigen Ansprüche
wobei das Klemmelement (18) als Keilblech (20) ausgeführt ist.

5. Rotor (2) nach einem der Ansprüche 1 bis 3,
wobei das Klemmelement (18) als Federblech (36) ausgeführt ist.

6. Rotor (2) nach Anspruch 5,
wobei das Federblech (36) im Wesentlichen Y-förmig ausgebildet ist.

7. Rotor (2) nach einem der vorherigen Ansprüche,
wobei das Klemmelement (18) aus einem amagnetischen Material ausgebildet ist.

8. Rotor (2) nach einem der vorherigen Ansprüche,
wobei die Welle (4) aus einem weichmagnetischen Material ausgebildet ist.

9. Rotor (2) nach einem der vorherigen Ansprüche,
wobei eine in Axialrichtung (A) verlaufende Führungsnut (14) oder Führungsschiene (43) zur radialen Fixierung der Teilblechpakete (10) des zumindest einen Blechpakets (8) vorgesehen ist.

10. Rotor (2) nach Anspruch 9,
wobei die Führungsnut (14) als eine Hammerkopfnut (40) oder Schwalbenschwanznut ausgebildet ist.

11. Rotor (2) nach einem der vorherigen Ansprüche,
wobei zumindest eines der zwei benachbarten Teilblechpakete (10) eine Aussparung (21) zur Aufnahme von zumindest einem Teil des Klemmelements (18) aufweist.

12. Rotor (2) nach einem der vorherigen Ansprüche,
wobei die Teilblechpakete (10) Permanentmagnete (12) aufweisen.

13. Rotor (2) nach einem der vorherigen Ansprüche,
wobei durch die Teilblechpakete (10) Kühlkanäle (38) für ein Kühlmittel verlaufen,
wobei das Klemmelement (18) für einen ungehinderten Durchfluss des Kühlmittels zwischen den benachbarten Teilblechpaketen (10) dimensioniert ist.

14. Rotor (2) nach einem der vorherigen Ansprüche,
wobei an zumindest einem axialen Ende des zumindest einen Blechpakets (8) ein Abschlusselement (22) zur Begrenzung des zumindest einen Blechpakets (8) angeordnet sind.

15. Rotor (2) nach Anspruch 14,
wobei zwischen dem zumindest einen Blechpaket (8) und dem Abschlusselement (22) eine formschlüssige Verbindung ausgebildet ist.

16. Rotor (2) nach einem der Ansprüche 14 oder 15,
wobei das Abschlusselement (22) lösbar mit der Welle (4) verbunden ist.

17. Rotor (2) nach einem der Ansprüche 14 bis 16,
wobei das Abschlusselement (22) als ein Blech (34) oder als ein Bolzen (24) ausgeführt ist.

18. Elektrische rotierende Maschine (3), insbesondere eine Synchronmaschine (44), welche zumindest einen Rotor (2) nach einem der Ansprüche 1 bis 17 aufweist.

19. Gondelantrieb (56) mit zumindest einer elektrischen rotierenden Maschine (3) nach Anspruch 18.

20. Schiff (54) mit zumindest einem Gondelantrieb (56) nach Anspruch 19.
